Europäisches Patentamt

European Patent Office

Office européen des brevets

(11) Numéro de publication : **0 097 100 B1**

# (12) FASCICULE DE BREVET EUROPÉEN

(45) Date de publication du fascicule du brevet :
05.03.86

(21) Numéro de dépôt : **83401208.0**

(22) Date de dépôt : **13.06.83**

(51) Int. Cl.⁴ : **G 01 R 19/12**, G 01 M 3/24, F 22 B 37/42

(54) **Dispositif de détection de l'évolution brutale d'un signal d'origine acoustique, servant notamment à la surveillance et à la détection de fuite.**

(30) Priorité : **15.06.82 FR 8210414**

(43) Date de publication de la demande :
**28.12.83 Bulletin 83/52**

(45) Mention de la délivrance du brevet :
**05.03.86 Bulletin 86/10**

(84) Etats contractants désignés :
**CH DE FR GB IT LI SE**

(56) Documents cités :

**Néant**

(73) Titulaire : **ELECTRICITE DE FRANCE Service National
2, rue Louis Murat
F-75008 Paris (FR)**

(72) Inventeur : **Baumaire, Alain
12, rue Jonquoy
F-75014 Paris (FR)**
Inventeur : **Desmas, Thierry
6, rue Georges Clémenceau
F-78400 Chatou (FR)**
Inventeur : **Vambenepe, Guy
7, Boulevard Marcel Pourtout
F-92500 Rueil Malmaison (FR)**

(74) Mandataire : **Mongrédien, André et al
c/o BREVATOME 25, rue de Ponthieu
F-75008 Paris (FR)**

**Description**

La présente invention a pour objet un dispositif de détection de l'évolution brutale d'un signal d'origine acoustique, servant notamment à la surveillance acoustique, et en particulier à la détection de fuite. Elle trouve une application principalement dans les installations de contrôle des réacteurs à neutrons rapides où elle permet de détecter des fuites dans la paroi d'échange thermique d'un générateur de vapeur chauffé au sodium. Mais elle peut s'appliquer chaque fois que l'on désire détecter une fuite dans un organe quelconque.

Dans un réacteur nucléaire à neutrons rapides le générateur de vapeur est généralement constitué par des tubes d'acier à l'intérieur desquels circulent de l'eau et de la vapeur sous forte pression. A l'extérieur des tubes circule du sodium liquide qui véhicule la chaleur dégagée par le cœur du réacteur. Les tubes constituent des parois d'échange thermique entre l'eau et le sodium. L'eau s'évapore à l'intérieur des tubes et la vapeur ainsi formée est utilisée pour entraîner des turbines.

En raison de la très grande affinité chimique entre l'eau et le sodium, tout défaut d'étanchéité d'un tube doit être détecté rapidement. En effet, une fuite d'eau dans le sodium peut, d'une part, évoluer d'elle-même brutalement (de quelques grammes par seconde à une centaine de grammes par seconde) créant un champ de pression important et, d'autre part, endommager gravement le générateur par percement des tubes voisins sous l'action d'un phénomène d'érosion-corrosion.

Deux moyens de détection de défaut d'étanchéité sont utilisés couramment. Il s'agit de moyens de détection d'hydrogène (dans le sodium et dans l'argon) et de membranes de sécurité.

Un dispositif de détection d'hydrogène mesure, de manière continue, la concentration d'hydrogène dans le sodium, en sortie des appareils ou dans l'argon des gaz de couverture. La sensibilité est excellente puisqu'un tel dispositif peut détecter des fuites dont le débit est inférieur au gramme par seconde. En revanche, le temps de réponse est grand et peut, dans certains cas, être excessif devant le temps de percement des tubes voisins de la fuite.

Les membranes de sécurité ont pour rôle d'éviter une surpression excessive à l'intérieur des générateurs de vapeur. Deux causes physiques peuvent entraîner leur rupture :

des ondes de pression engendrées dans l'appareil par l'apparition brutale de la fuite,

la mise en oscillation de la masse de sodium entre les volumes d'argon présents dans la boucle secondaire.

Plus récemment est apparue une autre technique de détection de fuites, qui met en œuvre des moyens acoustiques.

Le principe de fonctionnement de ces moyens est le suivant. Des capteurs acoustiques sont placés sur le générateur de vapeur à contrôler. Toute fuite de vapeur d'eau à haute pression dans le sodium liquide engendre une vibration des parois du générateur. Celle-ci se superpose aux vibrations provenant de différentes sources de bruit : écoulement du sodium, écoulement de la vapeur, mouvements d'organes mécaniques divers, vibration d'appareils, relaxation de contraintes métalliques. Toutes ces vibrations se propagent à travers le sodium et les pièces métalliques jusqu'aux parois du générateur de vapeur. Les capteurs délivrent un signal électrique complexe qui reflète l'ensemble de ces ondes. Son étendue spectrale recouvre la bande audible. L'onde sonore due à la fuite donne naissance à un signal caractéristique qui est détecté par un système électronique relié aux capteurs.

Une telle technique est décrite par exemple dans les comptes rendus de la Conférence ANS qui s'est tenue à Richland (WA), USA, les 20-24 avril 1980, notamment dans la conférence de D.A. GREENE, F.F. AHLGREN et D. MENEELY intitulée : « Acoustic Leak Detection System for Sodium Heated Steam Generators ».

Bien que cette technique présente des avantages, elle est cependant de mise en œuvre délicate pour les raisons suivantes. Le bruit de fond détecté par les capteurs acoustiques présente une intensité qui dépend d'un grand nombre de paramètres et notamment de la puissance du réacteur. Si cette puissance passe par exemple de 20 % à 80 % de sa valeur maximale, le bruit de fond peut augmenter de 20 dB, ce qui est considérable et recouvre largement une augmentation du signal acoustique qui proviendrait d'une fuite. Le traitement du signal acoustique revêt donc une importance considérable si l'on veut à coup sûr détecter une fuite et engendrer à bon escient une alarme. La présente invention a justement pour objet des moyens de traitement appropriés aptes à détecter l'apparition d'une fuite.

L'invention rejette en particulier deux techniques de l'art antérieur basées sur :

la comparaison à un seuil fixe : en cas de dépassement l'alarme est déclenchée ;

la comparaison à un seuil variable : le seuil est ajusté en fonction de certains paramètres thermohydrauliques propres à l'installation.

En effet, pour les raisons indiquées plus haut, la détection d'un dépassement de seuil n'est pas un critère sûr de l'apparition d'une fuite. L'invention préconise, de manière différente, l'étude de la pente du signal acoustique et la détection de l'apparition d'une variation rapide de cette pente.

Dans le cas de l'utilisation de plusieurs chaînes de contrôle, une procédure classique est utilisée pour limiter le risque d'alarme intempestive. Pour cela on impose une certaine cohérence entre les réponses de différentes chaînes de surveillance. Pour être prise en compte, une présomption d'alarme doit satisfaire aux conditions suivantes :

au moins deux chaînes surveillant le même appareil doivent signaler un défaut ;

une chaîne, placée sur un autre appareil, ne doit pas présenter en même temps d'indication de défaut ;

les paramètres thermohydrauliques ne doivent pas présenter de fluctuation excessive.

Les caractéristiques de l'invention apparaîtront mieux après la description qui va suivre, d'un exemple de réalisation donné à titre explicatif et nullement limitatif. Cette description se réfère à des dessins annexés sur lesquels :

la figure 1 représente une vue schématique du dispositif de l'invention ;

la figure 2 représente un schéma synoptique d'une variante des moyens de traitement du signal délivré par les capteurs ;

la figure 3 représente un exemple de courbe de variations de la valeur efficace du signal dans le cas de l'apparition d'une fuite ;

la figure 4 représente un signal lissé correspondant à la situation précédente ;

la figure 5 représente le signal obtenu en superposant au signal lissé un signal en dents de scie ;

la figure 6 illustre l'adéquation du signal précédent par des segments de droite,

la figure 7 représente les variations du nombre de séquences du signal en fonction du temps ;

la figure 8 représente la variation d'un critère fonction de ce nombre de séquences ainsi que de la longueur des première et dernière séquences,

la figure 9 illustre l'architecture générale d'un système de contrôle selon l'invention.

Il va de soi que la description qui suit ne se réfère à un générateur de vapeur à sodium liquide qu'à titre explicatif et que le domaine d'application de l'invention est plus général.

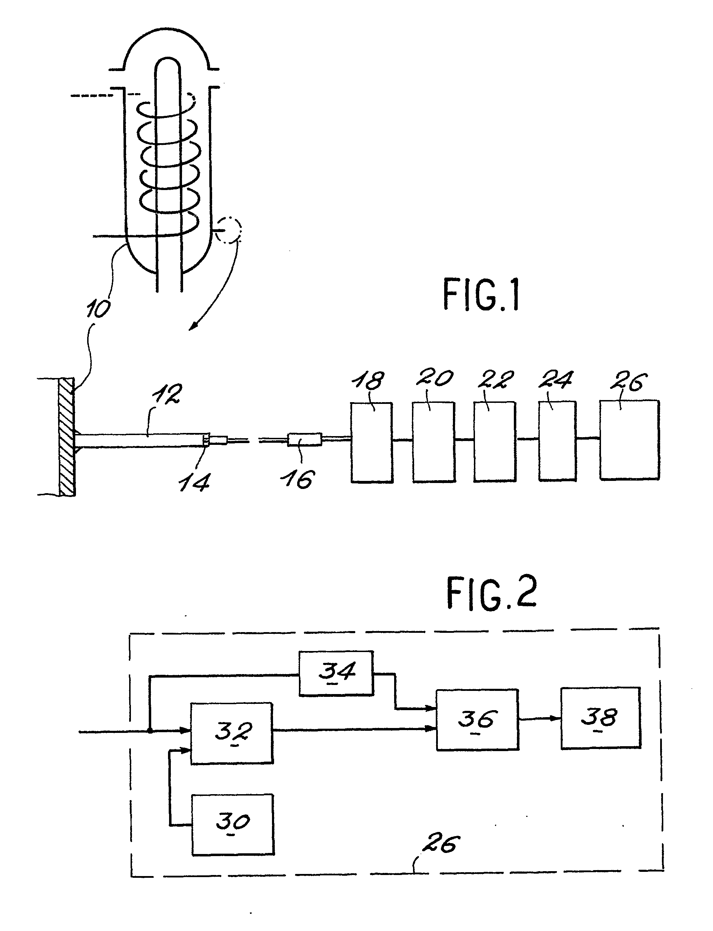

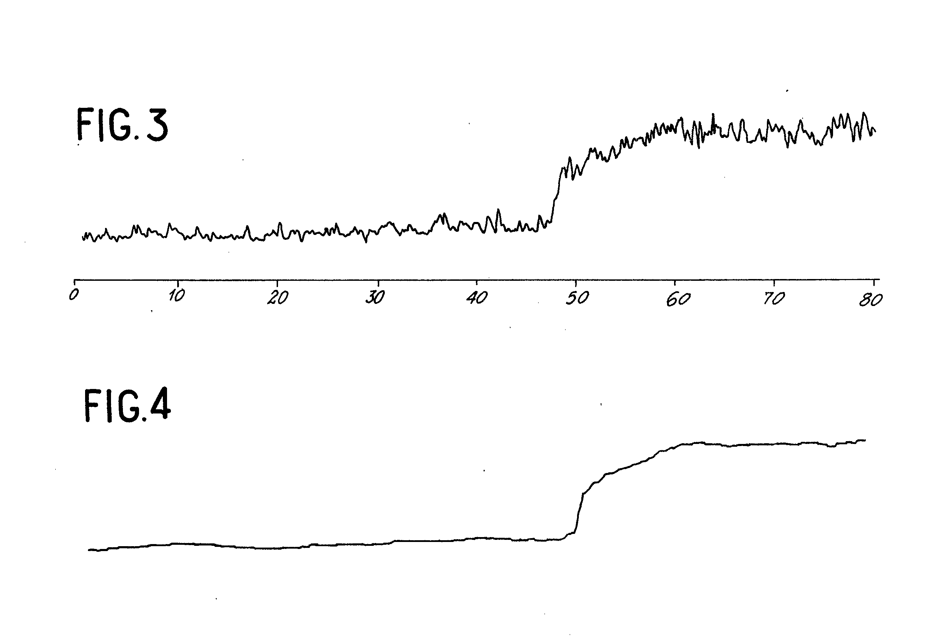

Sur la figure 1, un générateur de vapeur 10 est muni d'une tige métallique 12 terminée par un accéléromètre 14 relié à un convertisseur de charges 16. La tige est fixée par exemple sur la virole extérieure du générateur de vapeur. L'ensemble accéléromètre-convertisseur forme un capteur piézoélectrique qui traduit les vibrations du tube 10 en tension électrique. Cette tension est amplifiée par un circuit 18 et filtrée dans un circuit 20. On peut par exemple utiliser un filtre passe-bas limitant le signal à une bande inférieure à quelques kilohertz et par exemple en dessous de 5 kHz. Le signal filtré fait ensuite l'objet d'un traitement dans un circuit 22 qui délivre la valeur efficace de la tension. La forme du signal obtenu est représentée sur la figure 3 où le temps figure en abscisses. Le signal est ensuite traité dans un circuit d'analyse qui comprend d'abord un circuit de lissage 24 qui lisse le signal obtenu pour le délivrer des aspérités qu'il contient. La figure 4 illustre le signal lissé. Ce lissage peut être obtenu par échantillonnage et détermination de l'amplitude médiane de l'échantillon. Le circuit d'analyse comprend ensuite un circuit de détection d'anomalie 26.

C'est ce circuit qui permet de déclencher l'alarme. Selon l'invention, ce circuit possède la faculté de déterminer l'apparition d'un échelon dans le signal lissé, autrement dit l'apparition d'une brusque augmentation de la valeur efficace du signal.

La recherche d'un tel échelon est fondée sur les deux observations expérimentales suivantes que le demandeur a pu faire à partir de ses travaux sur le sujet :

une fuite d'eau dans le sodium évolue selon plusieurs phases : après une première phase, dite d'incubation, de durée pouvant atteindre 1 000 h, pendant laquelle la fissure initiale est rebouchée par les produits de corrosion, commence une phase d'évolution lente, de durée plus faible (1 h par exemple), pendant laquelle le débit augmente jusqu'à quelques grammes par seconde ; cette phase est suivie d'une phase d'évolution brutale avec augmentation du débit jusqu'à une centaine de grammes par seconde ;

la réaction chimique eau-sodium étant très exothermique, une fuite d'eau dans le sodium provoque l'apparition d'une flamme en forme de dard qui a pour effet de fondre le métal d'un ou plusieurs tubes voisins de la fuite ; un cratère se développe dans le métal du tube affecté et débouche brutalement par un trou dont le diamètre peut atteindre quelques millimètres ; il y a donc une nouvelle fuite dont le débit est de quelques centaines de grammes par seconde.

Dans les deux cas, l'amplitude de l'onde acoustique augmente brusquement. Il y a donc apparition d'un échelon dans l'évolution de la valeur efficace du signal.

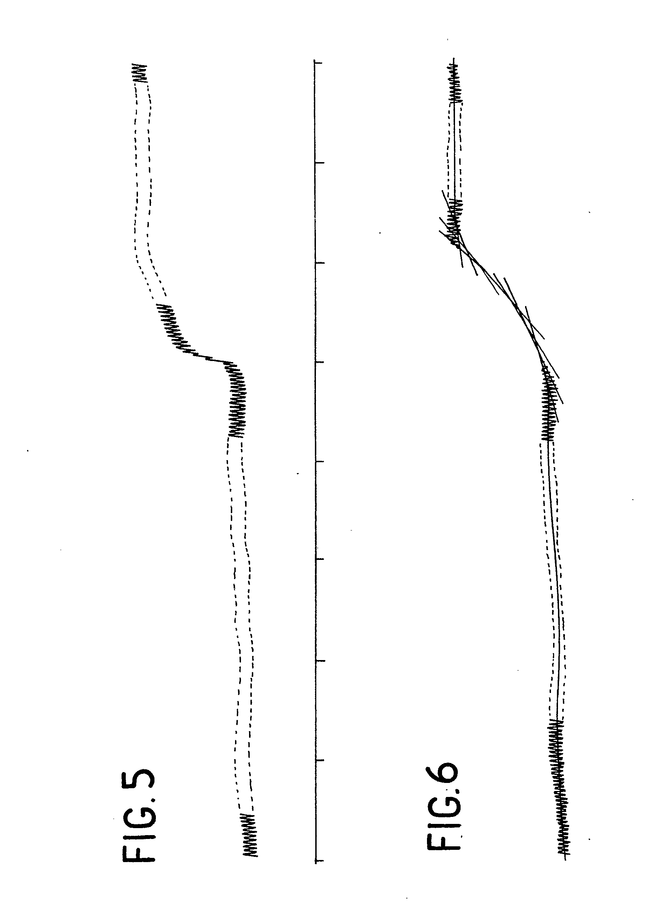

Les moyens aptes à détecter l'apparition de cet échelon sont représentés sur la figure 2. Un générateur 30 délivre un signal en dents de scie qui est superposé, dans un additionneur 32, au signal lissé. Le signal obtenu après addition des dents de scie est un signal de forme crantée qui est illustré sur la figure 5. Un circuit 34 reçoit le signal lissé et détermine des segments de droite qui ajustent au mieux le signal lissé par exemple au sens des moindres carrés. Un tel circuit est connu. Les segments de droite sont représentés sur la figure 6, superposés au signal cranté. Dans la partie où le signal est sensiblement constant, ces segments sont quasi-confondus avec le signal lissé. Mais dans la partie où le signal s'accroît brusquement chaque segment se distingue du signal réel. Un circuit 36 analyse la position du signal cranté autour de ces segments de droite à l'aide d'un test de séquence. Cette analyse s'effectue de la manière suivante. Le signal constitué par des segments de droite est délivré par le circuit 34 et le signal cranté est délivré par l'additionneur 32. Chaque sommet du signal cranté est situé soit au dessus soit au dessous du segment de droite qui ajuste, en ce point, le signal lissé. Si le signal lissé varie peu, les sommets du signal cranté sont alternativement au dessus et au dessous du segment de droite. Si, pour la commodité de l'explication, on affecte aux points situés au dessus du segment le signe + et aux points situés en dessous du segment le signe − on observera alors, dans le circuit 36, une suite de signes du type +−+−+− etc... Si, au contraire le signal lissé croît brusquement, le segment qui l'ajuste au mieux sera vite inférieur à la valeur réelle et le signal cranté sera complètement au dessus du segment. On observera alors une suite de signes ++++ etc... Inversement en cas de diminution brutale du signal on observera une suite de signes −−−− etc...

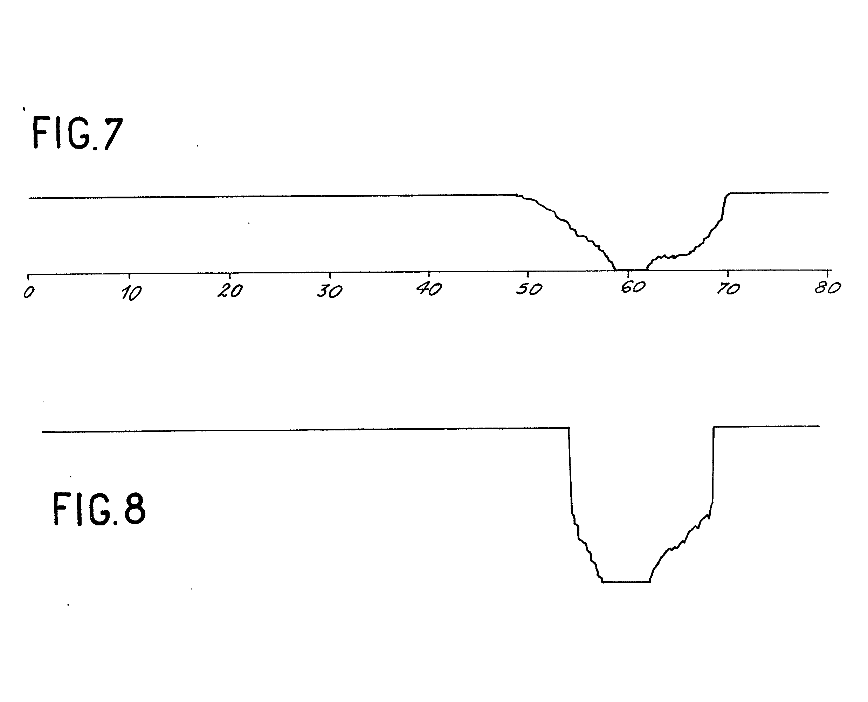

On peut alors effectuer divers tests de séquences, c'est-à-dire compter le nombre de groupes de points présentant une configuration de signes + ou − particuliers. Des séquences +−+−+− etc... seront par exemple nombreuses tant que le signal varie peu mais chuteront en nombre dès qu'on observera une montée brutale du signal, pour retrouver leur valeur lorsque le signal retrouvera une quasi-constante. Une telle variation est représentée sur la figure 7 où l'on voit nettement la variation brutale du nombre obtenu, signalant l'apparition de l'augmentation de pente du signal.

Des tests plus performants peuvent être imaginés, selon la manière de comptabiliser les diverses séquences en fonction de leur longueur, de leurs nombre de points, etc... A titre d'exemples la figure 8 représente l'évolution du nombre C défini de la manière suivante : $C=N+R-P-L-E$ avec : N nombre de points pris en compte, R nombre de séquences, P longueur de la première séquence prise en compte, L longueur de la dernière séquence prise en compte, E évolution de la longueur de la dernière séquence. Avec un tel critère la mise en évidence d'un changement d'amplitude est encore plus nette. Des développements qui sortiraient du cadre de la présente invention montrent que le nombre C est au plus égal à 2N. On peut alors imposer en outre $C=2N$ si la pente de la droite des moindres carrés est négative, ce qui évite la détection des variations négatives des pentes.

Le résultat du test, quel qu'il soit, est comparé dans un circuit 38 à seuil, pour la détection d'une évolution anormale du signal de la voie.

On observera que le seuil dont il s'agit ici est un seuil relatif au résultat du test et non un seuil relatif à la vapeur efficace du signal lui-même, pour les raisons déjà soulignées plus haut.

Le demandeur a effectué des tests à l'aide d'un dispositif selon l'invention. La sensibilité a été mesurée par des injections de différents fluides (argon, hydrogène, vapeur d'eau) à l'intérieur du faisceau tubulaire d'un générateur de vapeur. Huit injections ont été effectuées sous 180 bars avec un débit de 500 mg/s environ et une injection sous quelques bars avec un débit variant entre 6 g/s et 1 g/s.

Toutes ces injections ont été détectées par l'analyse du signal quels que soient le régime de fonctionnement et le lieu d'injection. Cependant, en régime nominal, l'évolution du signal acoustique, quoique significative, reste faible.

Il résulte de ces tests que la sensibilité de l'appareil de l'invention est inférieure à celle des dispositifs de détection d'hydrogène (qui est inférieure à 1 g/s). Mais elle est supérieure à celle des membranes de sécurité (qui est supérieure à 2 kg/s en cas de rupture rapide). En revanche, le temps de réponse du dispositif est beaucoup plus faible qu'avec les dispositifs de détection d'hydrogène. En effet, en raison de la vitesse du son dans le sodium, la transmission de l'information liée à l'apparition d'une fuite est pratiquement instantanée. Cependant, le traitement du signal, nécessaire à la détection et à la validation du signal d'alarme prend un certain temps. Il en résulte un léger retard qui dépend à la fois de la nature des signaux obtenus et de la méthode de détection retenue. Mais dans tous les cas, ce retard ne dépasse pas 10 secondes.

Un système de sécurité d'une centrale électronucléaire peut comprendre deux files de contrôle selon l'invention, isolées l'une de l'autre, et associée chacune à une alimentation électrique distincte. Le système est séparé en deux sous-ensembles assurant chacun les services nécessaires à une demi-centrale. Les deux sous-ensembles peuvent être interconnectés par une liaison isolée à 1 500 V et assurant un échange d'informations.

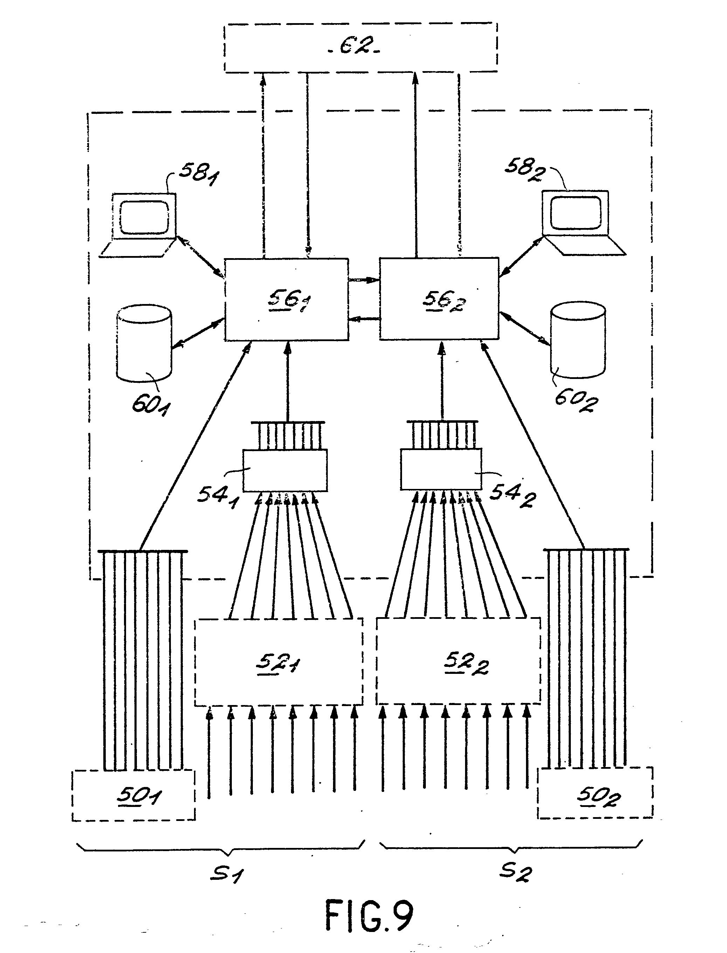

L'architecture générale d'un tel système de surveillance est illustrée sur la figure 9. Chaque sous-système $S_1$, $S_2$ est structuré en trois parties :

des moyens d'acquisition analogique d'une part de signaux thermohydrauliques comprenant des circuits $50_1$ et $50_2$ et d'autre part de signaux acoustiques comprenant des circuits $52_1$, $52_2$,

une chaîne de traitement analogique (filtrage et détermination de la valeur efficace) constituée par des circuits $54_1$, $54_2$,

une chaîne de traitement numérique constituée par un circuit de traitement $56_1$, $56_2$, une console alphanumérique $58_1$, $58_2$, une mémoire de masse $60_1$, $60_2$ ; ces moyens de traitement sont reliés à la salle de commande par un interface 62.

Les signaux thermohydrauliques peuvent être au nombre de 5 par sous-système. Ils correspondent aux mesures des paramètres suivants : débit d'eau à l'entrée des appareils (2 signaux), débit de sodium (2 signaux), pression de la vapeur sur la bretelle d'équilibrage des circuits de vapeur (1 signal). Il est possible d'étendre à 8 le nombre de signaux thermohydrauliques. Les signaux acoustiques sont au nombre de 8 (4 par générateur de vapeur).

La chaîne de traitement numérique peut comporter en plus des organes mentionnés une console ainsi qu'un dispositif d'impression et de tracé rapide. La liaison avec la chaîne de traitement analogique s'effectue, d'une part, par un convertisseur analogique-numérique et, d'autre part, par un dispositif de commande des chaînes analogiques.

Le circuit électronique d'analyse du signal qui vient d'être décrit utilise des méthodes qui, considérées séparément, sont déjà connues dans la technique du traitement de signal. On pourra se reporter notamment à ce sujet, à l'ouvrage intitulé « Random Data Analysis and Measurement Pro- cedures » de Julius S. Bendat et Alan G. Piersol, édité par Willey-Interscience et notamment à la page 235 qui traite des tests de séquences.

**Revendications**

1. Dispositif de détection de l'évolution brutale d'un signal d'origine acoustique, ce signal provenant de capteurs acoustiques (12, 14, 16, Fig. 1) disposés sur un organe (10) et délivrant un signal électrique, ce dispositif comprenant un circuit (18, 20, 22, Fig. 1) de mesure de la valeur efficace du signal délivré par les capteurs, et un circuit électronique d'analyse (24, 26, Fig. 1) de cette valeur efficace, caractérisé en ce que ce circuit d'analyse comprend un circuit de lissage (24, Fig. 1) de la valeur efficace, un générateur (30, Fig. 2) de signal en dents de scie, un additionneur (32, Fig. 2) recevant le signal lissé et ledit signal en dents de scie, et délivrant un signal cranté formé de la somme de ces 2 signaux, un circuit (34, Fig. 2) recevant le signal lissé et apte à déterminer un signal en forme de segments linéaires ajustant au mieux le signal lissé, un circuit de test (36, Fig. 2) relié à l'additionneur (32) délivrant le signal cranté et au circuit (34) délivrant les segments linéaires, ce circuit (36) étant apte à analyser la disposition du signal cranté par rapport au signal en forme de segments linéaires à l'aide d'un test de séquences et enfin un comparateur (38, Fig. 2) relié au circuit de test (36) et apte à comparer le résultat de cette analyse à un seuil prédéterminé.

2. Dispositif selon la revendication 1, caractérisé en ce que le circuit de mesure de la valeur efficace est précédé d'un filtre passe-bas opérant en dessous de quelques kilohertz.

3. Dispositif selon la revendication 1, caractérisé en ce que l'organe supportant les capteurs est un générateur de vapeur, le dispositif servant à détecter les fuites dans ce générateur.

**Claims**

1. Apparatus for the detection of the sudden generation of a signal of acoustic origin, said signal being provided by acoustic sensors (12, 14, 16, Fig. 1) located on a device (10) and delivering an electric signal, said apparatus comprising a circuit (18, 20, 22, Fig. 1) for measuring the effective value of the signal delivered by the sensors, and an electronic circuit (24, 26, Fig. 1) for analysis of said effective value, characterized in that the analysis circuit comprises a smoothing circuit (24, Fig. 1) for the effective value, a generator (30, Fig. 2) of a saw tooth signal, an adder (32, Fig. 2) receiving the smoothed signal and the saw tooth signal, and delivering a notched signal formed as the sum of said two signals, a circuit (34, Fig. 2) receiving the smoothed signal and adapted to determine a signal in the form of linear segments improving the smoothed signal, a test circuit (36, Fig. 2) connected to the adder (32) delivering the notched signal and a circuit (34) delivering the linear segments, said circuit (36) being adapted to analyse the disposition of the notched signal with respect to the signal in the form of linear segments with the aid of a sequence test, and finally a comparator (38, Fig. 2) connected to the test circuit (36) and adapted to compare the result of said analysis with a predetermined threshold.

2. Apparatus according to Claim 1, characterized in that the circuit for measuring the effective value is preceded by a low pass filter operating below several kilohertz.

3. Apparatus according to Claim 1, characterized in that the device supporting the sensors is a steam generator, the apparatus acting to detect leaks in said generator.

**Patentansprüche**

1. Erfassungseinrichtung für abrupte Änderungen eines Signals akustischen Ursprungs, wobei das Signal von akustischen Wandlern (12, 14, 16, Fig. 1) herkommt, die auf einer Einrichtung (10) angeordnet sind und ein elektrisches Signal liefern, wobei die Vorrichtung einen Meßschaltkreis (18, 20, 22, Fig. 1) für den Effektivwert des von den Wandlern gelieferten Signals und einen elektronischen Analyseschaltkreis (24, 26, Fig. 1) für diesen Effektivwert aufweist, dadurch gekennzeichnet, daß dieser Analyseschaltkreis umfaßt einen Glättungsschaltkreis (24, Fig. 1) für den Effektivwert, einen Generator (30, Fig. 2) für ein Sägezahnsignal, einen Addierschaltkreis (32, Fig. 2), der das geglättete Signal und das Sägezahnsignal erhält und ein aus der Summe dieser zwei Signale gebildetes, geripptes Signal liefert, einen Schaltkreis (34, Fig. 2), der das geglättete Signal erhält und mit dem ein Signal in der Form von linearen Segmenten bestimmbar ist, die aufs beste zu dem geglätteten Signal ausgerichtet sind, einen Prüfschaltkreis (36, Fig. 2), der mit dem das gerippelte Signal liefernden Addierschaltkreis (32) und dem die linearen Segmente liefernden Schaltkreis (34) verbunden ist, wobei der Schaltkreis (36) die Anordnung des gerippelten Signals in bezug auf das Signal in der Form der linearen Segmente mittels einer Prüfreihe analysieren kann, und schließlich einen Komparator (38, Fig. 2), der mit dem Prüfschaltkreis (36) verbunden ist und mit dem das Ergebnis dieser Analyse mit einer vorbestimmten Schwelle vergleichbar ist.

2. Vorrichtung nach Anspruch 1, dadurch gekennzeichnet, daß dem Meßschaltkreis für den Effektivwert ein Tiefpaßfilter vorgeschaltet ist, welches unterhalb einiger Kilohertz arbeitet.

3. Vorrichtung nach Anspruch 1, dadurch gekennzeichnet, daß die die Wandler tragende Einrichtung ein Dampferzeuger ist und die Vorrichtung dazu dient, Leckagen in diesem Erzeuger zu erfassen.

FIG.1

FIG.2

FIG.3

0    10    20    30    40    50    60    70    80

0 097 100

FIG.4

FIG.5

FIG.6

0 097 100

FIG.7

FIG.8

FIG.9